# EUROPÄISCHE PATENTSCHRIFT

(11) **EP 0 976 526 B1**
(45) Veröffentlichungstag und Bekanntmachung des Hinweises auf die Patenterteilung: **01.10.2003**
(21) Anmeldenummer: 99112932.1
(22) Anmeldetag: 05.07.1999
(51) Int. Cl.: B29C 49/04, B32B 27/40

(54) **Verfahren zum Herstellen einer Abdeckhaut für die Instrumententafel eines Kraftfahrzeuges**
Method for producing a cover skin for an instrument panel of a motor vehicle
Procédé pour la fabrication d'une peau de revêtement pour un tableau de bord d'un véhicule automobile

(30) Priorität: 18.07.1998 DE 19832469
(43) Veröffentlichungstag der Anmeldung: 02.02.2000
(73) Patentinhaber: Kautex Textron GmbH & Co. KG., 53229 Bonn (DE)
(72) Erfinder: Hänsel, Bruno, 53501 Grafschaft (DE); Moitzheim, Jürgen, 53639 Königswinter (DE)
(74) Vertreter: Koepsell, Helmut, Dipl.-Ing.

(56) Entgegenhaltungen:
- EP-A- 0 401 982
- EP-A- 0 427 104
- WO-A-94/09965
- DE-A- 3 143 994
- DE-A- 19 614 091
- US-A- 5 759 661

## Beschreibung

Im Allgemeinen sind derartige Instrumententafeln so ausgebildet, dass ein die Instrumente und Armaturen aufnehmender Tragkörper vorgesehen ist, der sich z. B. im Bereich vor den Vordersitzen über nahezu die gesamte Breite des Fahrzeugs erstrecken kann und durch eine gesondert hergestellte, an die Kontur des Tragkörpers angepasste Haut abgedeckt ist, die wenigstens überwiegend aus thermoplastischem Polyurethan besteht und eine Wandstärke aufweist, die z. B. 1 mm nicht oder nur wenig überschreitet. Diese Haut ist nicht selbsttragend, also praktisch uneingeschränkt verformbar.

Es ist bekannt, derartige haut- oder folienförmige Abdeckungen im sogenannten Slush-Verfahren herzustellen, bei welchem pulverförmiges thermoplastisches Polyurethan in eine entsprechend ausgebildete Form gegeben und dort unter Erwärmen durch biaxiales Schleudern oder auch durch andere geeignete Bewegungen über die Oberfläche der Form verteilt und auf die Schmelztemperatur gebracht wird. Das als gleichmäßige Schicht über die Form verteilte Pulver geliert aufgrund der Erwärmung, so dass die einzelnen Partikel des Pulvers sich zu einer durchgehenden Wand oder Haut verbinden, die dann nach ausreichender Abkühlung aus der Form herausgenommen und durch geeignete Schneidvorgänge auf die Passform gebracht wird, die erforderlich ist, um sie auf die Halterung für die Instrumente aufzubringen. Dieses Verfahren ist außerordentlich aufwendig, insbesondere auf Grund der Tatsache, dass in Abhängigkeit von der Größe der herzustellenden Abdeckungen für einen Arbeitszyklus, in welchem eine solche Abdeckung hergestellt wird, drei bis sieben Minuten erforderlich sind.

In Anbetracht der außerordentlich großen Stückzahlen, in denen derartige Abdeckungen benötigt werden, besteht ein dringender Bedarf nach einem wirtschaftlicheren Herstellungsverfahren.

Aus der DE 31 43 994 ist ein Verfahren zur Herstellung von dünnwandigen Gegenständen aus thermoplastischen Polyurethanen bekannt, und zwar durch Extrusion oder Blasverformung. Die Druckschrift befasst sich mit dem Einbau von funktionalen Silikonderviaten und dem Zusatz von äußeren Trennmitteln oder Trennmittelgemischen zu den zu extrudierenden Polyurethanen. Die Herstellung dünnwandiger Gegenstände aus thermoplastischen Polyurethanen durch Extrusion bzw. Blasformen ist also grundsätzlich aus der DE 31 43 994 bekannt.

Die EP 0 401 982 beschreibt die Herstellung von Fahrzeugsitzbezügen aus thermoplastischem Elastomer, beispielsweise aus Polyurethan, durch Extrusionsblasformen. Bevorzugt wird allerdings die Herstellung des Sitzbezugs aus einem mehrschichtigen Extrudat mit einer äußeren Schicht aus PET. Die Wandstärke eines solchen Sitzbezuges ist verhältnismäßig unkritisch, die Länge des Vorformlings ebenfalls, so dass die Extrusion eines solchen Sitzbezugs technisch kein Problem darstellt.

Aus der WO 94/09965 ist die Herstellung eines Handschuhs aus einem thermoplastischen Elastomer bekannt. In dieser Druckschrift wird bereits anschaulich beschrieben, dass das Blasformen von verhältnismäßig steifen Kunststoffartikeln bekannt sei, nicht hingegen die Herstellung sehr dünnwandiger Elastomerartikel, wie beispielsweise eines Handschuhs für medizinische Zwecke. Es wird vorgeschlagen, den Handschuh aus einem thermoplastischen Elastomer herzustellen, welches beispielsweise unter dem Handelsnamen "Hytrel" bekannt ist. Die Extrusion eines Handschuhs mit einem frei im Extrusionkopf hängenden Vorformling ist unter dem Gesichtspunkt der Schmelzestabilität verhältnismäßig unproblematisch, da der Vorformling nur eine verhältnismäßig geringe Länge hat.

Aus der DE 196 10 091 A1 ist eine mehrschichtige thermoplastische Folie aus Polyurethanen und ein Verfahren zu deren Herstellung bekannt. Die Herstellung solcher Folien erfolgt nach dieser Druckschrift bevorzugt im sogenannten Blasfolienverfahren, was nicht vergleichbar ist mit dem herkömmlichen Extrusionsblasverfahren insoweit, als dass gegen die Schwerkraft nach oben extrudiert wird. Durch Anblasen mit Luft wird eine ringförmige Schmelzfahne erzeugt, die sich sogleich nach Austritt aus dem Extruder abkühlt, dann flachgelegt wird und zu Folienbahnen aufgewickelt wird.

Die EP 0 427 104 A2 beschreibt einige Zusammensetzungen thermoplastischer Elastomere zur Verarbeitung durch Blasformen.

Die US-A-5,759,661 beschreibt die Herstellung einer Abdeckplatte für ein Instrumentenpaneel durch Extrusion eines Vorformlings mit inneren und äußeren Schichten unterschiedlicher Kunststoffe mit unterschiedlichen Materialeigenschaften. Die Abdeckplatte wird allerdings als Bauteil mit Eigensteifigkeit, d. h. als tragendes Bauteil hergestellt, wobei der Vorformling zwischen den Formhälften der sich schließenden Blasform so zusammengedrückt wird, dass die Innenwandung des Vorformlings zwei sich miteinander verschweißende Schichten bildet, die die Aussteifung des Paneels bewirkt.

Demzufolge liegt der Erfindung die Aufgabe zugrunde, eine Abdeckhaut für ein Instrumentenpaneel beispielsweise eines Kfzs bereitzustellen, die so beschaffen ist, dass sie aus Polyurethan in großen Stückzahlen wirtschaftlich herstellbar ist, und zwar unabhängig von deren Abmessungen.

Dabei soll die Qualität, also insbesondere mechanische Beanspruchbarkeit, Aussehen und andere Eigenschaften, die für die dem Erzeugnis zugedachte Funktion erforderlich sind, allen Anforderungen genügen und möglichst zumindest so gut sein wie die der bisher im Slush-Verfahren hergestellten Abdeckungen. Letztere sollen beispielsweise im Bedarfsfall weich und elastisch sein.

Die Aufgabe wird mit den Merkmalen des Anspruchs 1 gelöst.

Es hat sich gezeigt, dass, wenngleich thermoplastisches Polyurethan im Extrusions-Blasverfahren nicht ohne weiteres verarbeitbar ist, eine Produktion der Abdeckungen trotz der für dieses Verfahren ungünstigen Voraussetzungen insbesondere bezüglich der Dimensionen - Länge und geringe Wandstärke, großer Durchmesser des Vorformlings und des daraus herzustellenden aufgeweitete Erzeugnisses - möglich ist, die erheblich wirtschaftlicher ist als bei Anwendung der herkömmlichen Verfahren, wobei der in der Blasform hergestellte Hohlkörper normalerweise eine Nachbearbeitung erfahren muß, um das gewünschte Enderzeugnis zu erhalten.

Dabei kann das Verfahren besonders wirtschaftlich gestaltet werden, indem in der Blasform ein Hohlkörper hergestellt wird, aus welchem durch entsprechende Trennvorgänge zwei Abdeckungen - oder mehr - erhalten werden. Zwar erfordert dies eine entsprechend große Blasform. Jedoch stellen die dadurch verursachten Mehrkosten in Anbetracht der großen Stückzahlen, in denen derartige Abdeckungen benötigt werden, keinen Nachteil dar. Der blasgeformte Hohlkörper kann so ausgebildet sein, daß sich zwischen den beiden Abschnitten des geblasenen Hohlkörpers, die nach dem Trennvorgang jeweils eine Abdeckung darstellen, ein Materialbereich befindet, der Überschuß darstellt und demzufolge am geblasenen Hohlkörper vor dem Trennvorgang einen Abstand zwischen den beiden Abschnitten für die Abdeckung definiert. Dieser Überschuß darstellende Materialbereich am geblasenen Hohlkörper trägt auch der Tatsache Rechnung, daß die Begrenzungskanten der Enderzeugnisse unregelmäßig verlaufen können.

Um den Besonderheiten des thermoplastischen Polyurethans Rechnung zu tragen, ist es vorteilhaft, die Verarbeitung, d.h., Plastifizierung und Formung des Ausgangsmaterials zum Vorformling, unter bestimmten Bedingungen bezüglich z. B. Druck und Temperatur durchzuführen, wobei das Ausgangsmaterial zweckmäßigerweise in Form eines Granulats in den Extruder eingegeben wird. Insbesondere ist es vorteilhaft, den Vorformling, der eine Länge von 1,80 m oder mehr aufweisen kann, mittels der bei der Kunststoffverarbeitung bekannten diskontinuierlicher Extrusion herzustellen, wobei das plastifizierte Material zunächst in einen Speicherraum gefördert und dann mittels eines Kolbens oder sonstwie in geeigneter Weise durch die im allgemeinen ringförmige Austrittsöffnung des Extrusionskopfes in Form eines Schlauches ausgestoßen wird. Dabei ist anzustreben, den Vorformling innerhalb kurzer Zeit, beispielsweise bei einer Länge von 1,30 m bis 1,80 m innerhalb von 1 min. oder weniger, auszustoßen. Dies hat den Vorteil, daß der sehr dünnwandige Vorformling, dessen Wanddicke etwa 2 mm betragen kann, nur kurze Zeit am Extrusionskopf hängend durch sein eigenes Gewicht beansprucht wird und somit die erforderliche Länge erreicht, bevor er unter der Einwirkung seines Gewichtes und der durch dieses bewirkten Zugbeanspruchung in unkontrollierter Weise abreißen könnte. Als besonders vorteilhaft hat es sich herausgestellt, das thermoplastisches Polyurethan mit einer Geschwindigkeit von 10 - 35 cm / sec., z. B. 10 - 25 cm / sec. zu extrudieren. Die Herstellung eines Vorformlings mit einer Länge von etwa 180 cm dauert dann 10 sec. oder weniger.

Dabei ist es zweckmäßig, die Plastifizierung im Extruder bei einer Temperatur im Bereich zwischen 165 und 200° durchzuführen.

Ferner ist es vorteilhaft, den Extruder einschließlich Extrusionskopf so auszuführen, daß vor allem innerhalb des Extruders und des Kopfes Bereiche und Teile vermieden werden, in denen bzw. durch die eine scherende Wirkung auf den strömenden Kunststoff ausgeübt wird. Jedenfalls sollte eine derartige scherende Beanspruchung des Kunststoffes bei seiner Verarbeitung auf das geringstmögliche Maß reduziert oder so kurz wie möglich gehalten werden.

Vorzugsweise wird aliphatisches Polyurethan verwendet, welches gegen UV-Strahlen beständig ist.

Als besonders zweckmäßig hat sich eine Verfahrensweise erwiesen, bei welcher ein Vorformling mit einer wenigstens zweischichtigen Wandung hergestellt wird und jede Schicht aus thermoplastischem Polyurethan besteht und beide Schichten sich durch die Eigenschaften der sie bildenden Polyurethane unterscheiden. So kann es zweckmäßig sein, die Anordnung so zu treffen, daß die äußere Schicht der Abdeckhaut aus aliphatischem Polyurethan und die innere Schicht aus aromatischem Polyurethan besteht. Da aliphatisches Polyurethan gegen UV-Strahlen beständig ist, hätte eine derartige Anordnung den Vorteil, daß sich die Abdeckhaut unter der Einwirkung von UV-Strahlen nicht verändert. Die Verwendung von aromatischem Polyurethan für die innere Schicht der Abdeckhaut hätte den Vorteil geringerer Kosten, da aromatisches Polyurethan im allgemeinen merklich billiger ist als aliphatisches Polyurethan. Die Gesamtdicke beider Schichten des Fertigerzeugnisses braucht nicht größer sein als dies bei einer einschichtigen Abdeckhaut aus Polyurethan der Fall sein würde. So kann die äußere Schicht eine Stärke von 0,2 bis 0,6 mm und die innere Schicht eine Stärke von 0,8 bis 1,8 mm aufweisen und die Gesamtdicke beider Schichten z. B. 1mm betragen.

Die Herstellung eines wenigstens zweischichtigen Vorformlings setzt die Anwendung der Coextrusion voraus, für die eine Extrusionseinrichtung mit wenigstens zwei Extrudern - einen für jede Materialart - erforderlich ist. Im allgemeinen wird es bei Anwendung der diskontinuierlichen Extrusion vorteilhaft sein, jedem Extruder einen eigenen Speicherraum zuzuordnen, der durch einen Kolben entleert wird. Dazu kann in bekannter Weise die Schnecke des jeweiligen Extruders verwendet werden, die dann verschiebbar gelagert sein müßte. Im allgemeinen wird es jedoch zweckmäßiger sein, jedem Speicherraum ein besonderes Ausstoßmittel, also beispielsweise einen Ringkolben, zuzuordnen. Dies ist ebenfalls allgemein bekannt und bedarf keiner näheren Erläuterung.

Da häufig so verfahren wird, daß die dünne Abdeckhaut mit einer dünnen Schicht aus Schaumstoff hinterlegt wird, um beispielsweise ungleichmäßigkeiten und Unebenheiten des Tragkörpers auszugleichen oder die Oberfläche der Abdeckhaut mit einem "weichen Griff" zu versehen, kann es bei Anwendung des Extrusions-Blasverfahrens zur Herstellung einer solchen Abdeckhaut auch zweckmäßig sein, eine Coextrusion durchzuführen derart, daß in bekannter Weise ein wenigstens zweischichtiger Vorformling extrudiert wird, dessen eine Schicht aus thermoplastischem Polyurethan und dessen andere Schicht aus einem Kunststoffmaterial, z. B. Polyethylen, gegebenenfalls aber auch thermoplastischem Polurethan besteht, welches eine Komponente aufweist, durch welche ein Aufschäumen dieses Kunststoffmaterials bewirkt wird. Dieses Aufschäumen tritt im allgemeinen nach dem Austritt des Kunststoffes aus der Öffnung des Extrusionskopfes auf, da vorher der im Extrusionssystem herrschende Druck ein Aufschäumen des Materials verhindert.

Falls erforderlich, kann die Wandung des Vorformlings noch eine zusätzliche Schicht aufweisen, die als Haftvermittlerschicht zwischen der Schicht aus Polyurethan und dem aufschäumenden Material angeordnet ist, um diese beiden Schichten miteinander zu verbinden. In diesem Fall wäre es erforderlich, auch für die Haftvermittlerschicht einen besonderen Extruder und ggf. auch einen besonderen Speicherraum vorzusehen.

Eine zusätzliche aufgeschäumte Schicht kann natürlich auch dann vorgesehen sein, wenn, wie bereits beschrieben, die eigentliche Abdeckhaut aus zwei Polyurethan-Schichten besteht. Die aufgeschäumte Schicht könnte dann - im Bedarfsfall unter Zwischenschaltung eines Haftvermittels - auf der Schicht aus aromatischem Polyurethan aufgebracht sein.

Auch hier gilt entsprechend, daß die Anzahl der Extruder abhängt von der Anzahl der Schichten aus unterschiedlichem Material im Vorformling bzw. dem daraus herzustellenden Erzeugnis.

Bei Anwendung der Coextrusion zum Aufbringen einer aufgeschäumten Schicht kann ggf. ein besonderer Arbeitsschritt, durch welchen eine Schaumstoffschicht nachträglich zwischen der dünnen Polyurethanhaut und dem Tragkörper angebracht wird, eingespart werden.

Im übrigen kann das Anbringen einer aufgeschäumten Schicht mittels Coextrusion auch zur Stabilisierung des Vorformlings beitragen, da in Abhängigkeit von den Dickenverhältnissen und der Beschaffenheit des Materials, aus welchem die Schaumstoffschicht am Vorformling entsteht, letzterer, d.h. insbesondere die normale Polyurethanschicht desselben mit einer Dicke von z. B. 2 mm, eine Stabilisierung erfährt derart, daß die beim Extrudieren von Polyurethan auftretenden Probleme verringert werden, da Stabilität und Festigkeit des am Extrusionskopf hängenden und ggf. von einem Greifer für den Transport zur Blasform erfaßten Vorformlings nicht ausschließlich von den dafür maßgeblichen Eigenschaften des thermoplastischen Polyurethans abhängen.

In der Zeichnung ist im Schema der Ablauf der Herstellung einer Abdeckhaut für eine Instrumententafel dargestellt. Es zeigen:
- Fig. 1: Teile einer Extrusions-Blasvorrichtung mit dem extrudierten Vorformling zwischen den Teilen einer geöffneten Blasform in Vorderansicht, teilweise im Schnitt,
- Fig. 2: die perspektivische Ansicht der geöffneten Blasform mit dem dazwischen befindlichen durch Aufweiten des Vorformlings hergestellten geblasenen Hohlkörper,
- Fig. 3: in perspektivischer Ansicht den zur Herstellung von zwei Enderzeugnissen unterteilten Hohlkörper,
- Fig. 4: eine der Fig. 1 entsprechende Darstellung einer zwei ten Ausführungsform,
- Fig. 5: einen Ausschnitt aus einem mit der Vorrichtung gemäß Fig. 4 hergestellten Fertigerzeugnis in größerem Maßstab,
- Fig. 6: eine der Fig. 1 entsprechende Darstellung einer dritten Ausführungsform,
- Fig. 7: in größerem Maßstab einen Ausschnitt aus einem Fertig erzeugnis, das unter Verwendung der Vorrichtung gemäß Fig. 6 hergestellt wird.

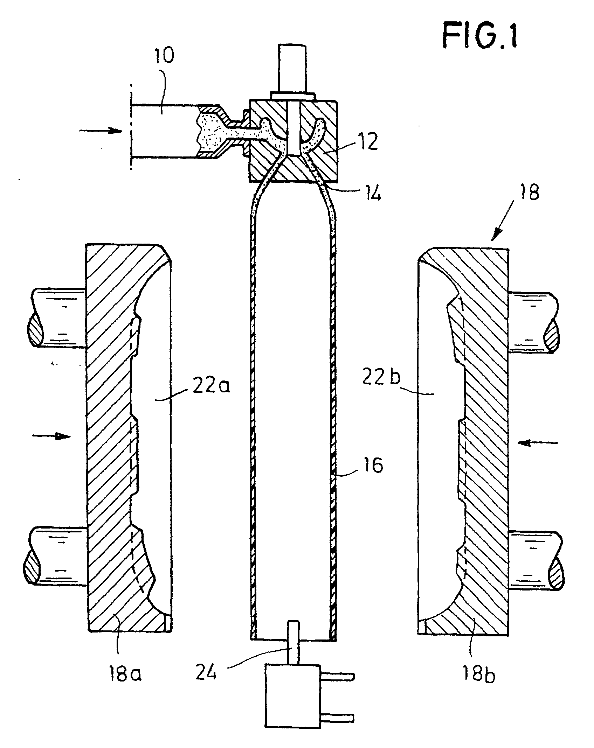

Die in Fig. 1 dargestellte Extrusions-Blasvorrichtung ist in üblicher weise mit einem Extruder 10 und einem daran angebrachten Extrusionskopf 12 versehen. Das Extruder 10 und Extrusionskopf 12 aufweisende Extrusionssystem ist mit wenigstens einem in der Zeichnung nicht dargestellten Speicherraum versehen, in den hinein durch den Extruder 10, der in üblicher Weise mit einer ebenfalls nicht dargestellten Schnecke versehen ist, Material hineingefördert wird. Sobald die für die Herstellung eines Vorformlings erforderliche Materialmenge sich in diesem Speicherraum angesammelt hat, wird letzterer im allgemeinen durch einen Kolben entleert, wobei das thermoplastische Material durch die ringförmige Austrittsöffnung 14 unter Bildung eines schlauchförmigen Vorformlings 16 extrudiert wird. Im allgemeinen ist es zweckmäßig und möglich, den Vorformling 16 direkt zwischen die beiden Teile 18a, 18b einer geöffneten Blasform 18 zu extrudieren, die unterhalb des Extrusionskopfes 12 angeordnet ist. Die Blasform 18 kann hälftig unterteilt sein, wenngleich dies nicht erforderlich ist. So könnte dann, wenn bei gleichzeitiger Herstellung von zwei Enderzeugnissen, die ungleich sind, die Blasform auch in unsymmetrischer Weise unterteilt sein.

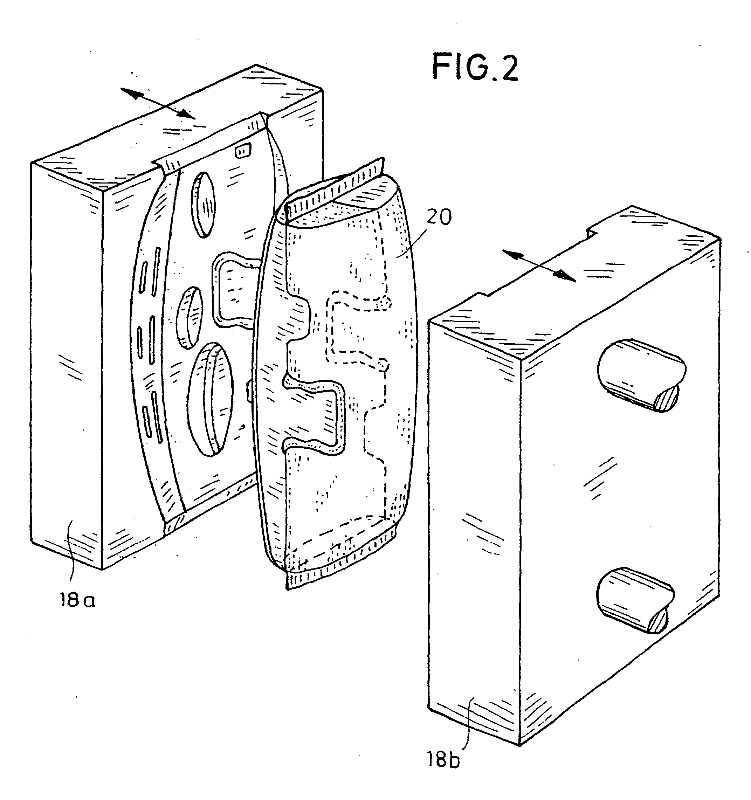

Der Vorformling 16 hat eine Wanddicke von beispielsweise 2 mm, die im Zuge des Aufweitvorganges durch entsprechende Streckung verringert wird, so daß der in Fig. 2 dargestellte aufgeweitete Hohlkörper 20, dessen Gestalt der des Formnestes 22a, 22b entspricht, eine Wandstärke von beispielsweise 1 mm aufweist. Bei der Verarbeitung von thermoplastischem Material wird zweckmäßigerweise so vorgegangen, daß das aus dem Extrusionskopf 12 austretende Material eine Temperatur von etwa 165° C bis 200° C. hat. Dies gilt sowohl für Polyether-Polyurethan als auch für Polyester-Polyurethan, die beide unter den genannten Bedingungen, also insbesondere bei diskontinuierlicher Extrusion mit möglichst kurzen Extrusionszeiten und möglichst unmittelbar daran anschließender Aufnahme des Vorformlings durch die Blasform, in der erforderlichen Länge und mit der relativ geringen Wandstärke extrudierbar sind.

Sobald der Vorformling 16 seine für die Herstellung des aufgeblasenen Artikels 20 erforderliche Länge aufweist, wird die Blasform 18 durch Zusammenfahren der beiden Blasformteile 18a, 18b geschlossen, wobei gleichzeitig auch der Vorformling durch die dazu mit Abquetschkanten versehene Blasform am oberen Ende vollständig und am unteren Ende unter Belassung einer Öffnung verschlossen wird, durch die eine Blasdüse 24 für die Zufuhr der Druckluft, die das Aufweiten des Vorformlings 16 bewirkt, in letzteren hineinragt.

Das eigentliche Blasverfahren ist allgemein bekannt, so daß es hier nicht im Detail beschrieben zu werden braucht. So kann das Aufweiten des Vorformlings 16 bereits im Verlauf des Schließens der Blasform 18 beginnen. Jedenfalls erfolgt nach dem vollständigen Schließen der Blasform 18 das Aufweiten des Vorformlings 16 bis zur Anlage an der Wandung des Formnestes 22a, 22b, d.h., zur Gestalt des Hohlkörpers 20. Die Wandung des Formnestes kann so ausgebildet sein, daß sie am Hohlkörper Markierungen für später durchzuführende Schneidvorgänge bildet.

Nach ausreichender Abkühlzeit, in welcher sich das thermoplastische Material soweit verfestigt, daß es in ausreichender Weise mechanisch beanspruchbar ist, wird die Hohlform 18 geöffnet. Dazu werden die beiden Blasformteile 18a, 18b jeweils in die in Fig. 2 dargestellte Position gefahren, so daß der aufgeweitete Artikel 20 entnommen werden kann. Da die Wandung des Hohlkörpers 20 nicht selbsttragend ist, kann es zweckmäßig sein, zur besseren Handhabbarkeit zunächst innerhalb des Hohlkörpers 20 einen gewissen Überdruck aufrechtzuerhalten. Dies kann z. B. auch in der Weise geschehen, daß die Druckluftzufuhr in den Vorformling 16 bzw. in den daraus hergestellten Hohlkörpers 20 nicht über eine Düse 20 mit größerem Durchmesser, sondern über eine nadelförmige Blasdüse erfolgt, die lediglich ein kleines Loch in der Wandung des Hohlkörpers 20 verursacht, so daß demzufolge auch der Druckausgleich zwischen Hohlkörper und Umgebung einige Zeit dauert.

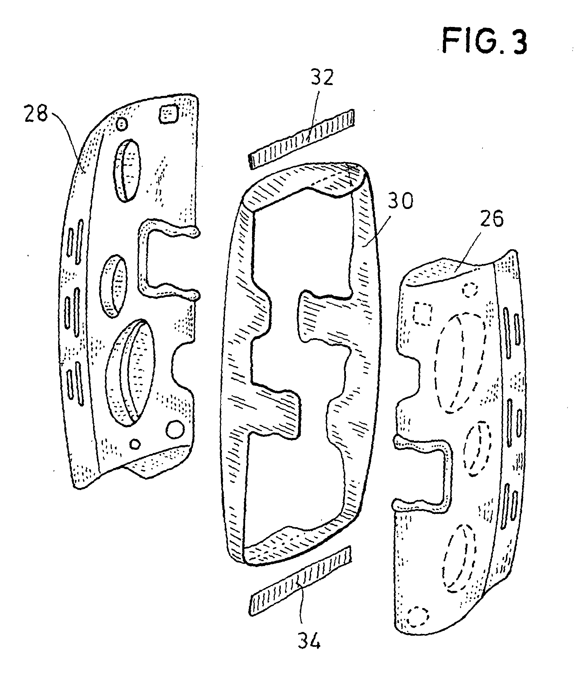

Der Hohlkörper 20 kann dann nach ausreichender Verfestigung derart unterteilt werden, daß gemäß der Darstellung der Fig. 3 zwei Enderzeugnisse in Form jeweils einer im wesentlichen glatten und in großen Bereichen nahezu ebenen oder wenig gewölbten Abdeckhaut 26, 28 entstehen, die, wie bereits erwähnt, ggf. unterschiedlich ausgeführt sein können, sowie ein Abfallteil 30, welches am geblasenen Artikel 20 den Bereich zwischen den beiden die Endprodukte darstellenden Teilen 26 und 28 bildet, sowie zwei Abfallteile 32 und 34, die am Vorformling 16 und am geblasenen Artikel die Endabschnitte bildeten. Die Abfallteile 30, 32 und 34 können in üblicher Weise nach Zerkleinerung wieder in das Extrusionssystem zurückgeführt werden.

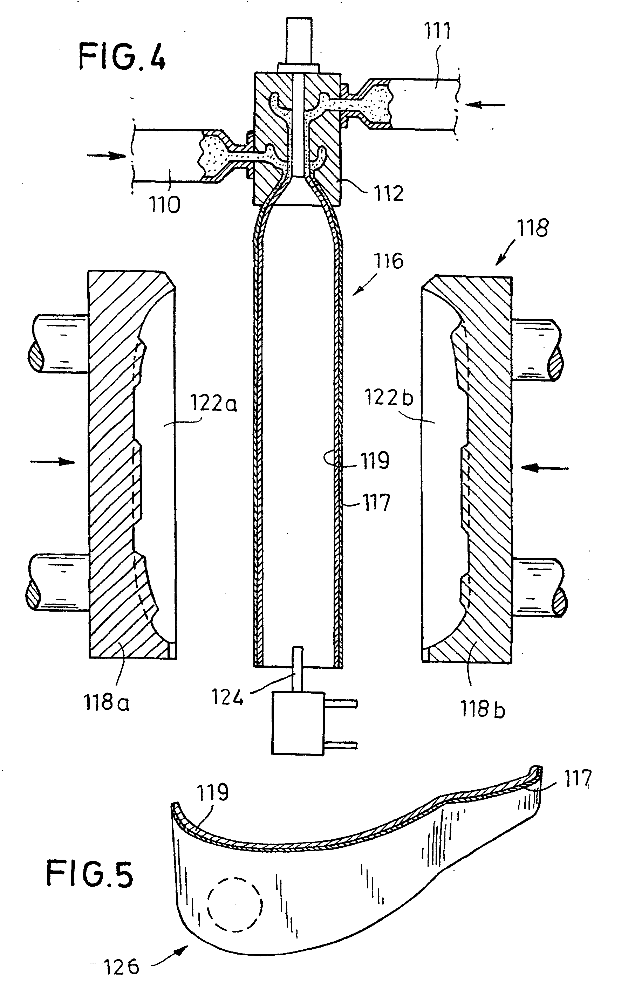

Die in Fig. 4 dargestellte Extrusions-Blasvorrichtung stimmt in wesentlichen Teilen mit jener gemäß Fig. 1 überein, so daß gleiche Teile auch mit gleichen, in Fig. 4 um 100 höheren Bezugszeichen versehen sind. Der wesentliche Unterschied gegenüber der Ausführungsform gemäß Fig. 1 besteht darin, daß dem Extrusionskopf 112 zwei Extruder 110, 111 zugeordnet sind, von denen der Extruder 110 ein aliphatisches Polyurethan und der Extruder 111 ein aromatisches Polyurethan verarbeitet. Die Führung der beiden aus den Extrudern kommenden Materialströme im Extrusionskopf 112 erfolgt dabei derart, daß die beiden Materialströme in üblicher Weise in eine ringförmige Querschnittsform gebracht, zusammengeführt und koextrudiert werden derart, daß das aliphatische Polyurethan die äußere Schicht 117 und der Materialstrom aus aromatischem Polyurethan die innere Schicht 118 des Vorformlings 116 bildet. Beide Schichten sind direkt miteinander verbunden, da beide Polyurethan-Arten kompatibel sind derart, daß sie miteinander verschweißbar sind.

Bei diskontinuierlicher Extrusion sind vorzugsweise zwei Speicherräume, einer für jeden Materialstrom, vorhanden, die in üblicher weise durch einen Kolben entleert werden.

Die diskontinuierliche Coextrusion unter Verwendung von einem oder mehreren Speicherräumen ist allgemeiner Stand der Technik und jedem Fachmann geläufig, so daß die Ausgestaltung des Extrusionskopfes für die diskontinuierliche Coextrusion im Detail nicht dargestellt ist.

Entsprechend dem Aufbau des Vorformlings 118 ist das aus letzterem hergestellte Fertigerzeugnis 126 ebenfalls zweischichtig ausgebildet derart, daß die äußere Schicht 117, die in eingebautem Zustand beispielsweise in einem Kraftfahrzeug dem Tageslicht ausgesetzt ist, aus einem aliphatischen Polyurethan besteht, wohingegen die darunter befindliche Schicht 119 aus einem aromatischen Polyurethan besteht. Beide Schichten sind, wie bereits erwähnt, direkt miteinander verschweißt.

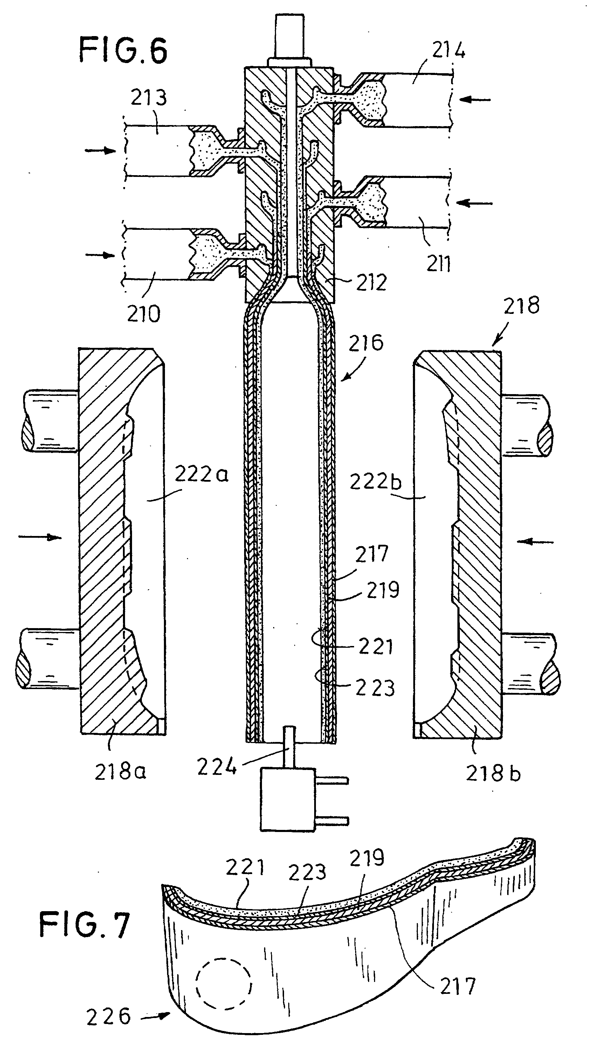

Die Extrusions-Blasvorrichtung des Ausführungsbeispiels gemäß Fig. 6 stimmt ebenfalls in allen wesentlichen Teilen mit jener gemäß Fig. i überein, so daß gleiche Teile mit gleichen, jedoch um 200 höheren Bezugszeichen versehen sind. Dem Extrusionskopf 212 sind vier Extruder 210, 211, 213 und 215 zugeordnet. Die Extruder 210, 211 dienen der Verarabeitung, insbesondere Plastifizierung von zwei unterschiedlichen Polyurethan-Arten derart, daß an dem resultierenden Vorformling 216 die äußere Schicht 217 aus aliphatischem Polyurethan und die unmittelbar daran anschließende Schicht 219 aus aromatischem Polyurethan besteht. Der Extruder 214 dient der Verarbeitung eines thermoplastischen Kunststoffmaterials, z. B. Polyethylen, welches ein Additiv enthält, durch welches ein Aufschäumen dieses Kunststoffmaterials bewirkt wird. Die daraus gebildete Schicht 221 des Vorformlings 216 führt zum Vorhandensein einer Schaumstoffschicht 221 am Fertigerzeugnis, wie dies in Fig. 7 dargestellt ist. Da Polyethylen - oder auch viele andere für diesen Zweck in Betracht kommenden Kunststoffmaterialien - mit Polyurethan und somit auch mit der Schicht 219 aus aromatischem Polyurethan nicht verschweißbar ist, besteht die Notwendigkeit, zwischen der Schicht 219 aus aromatischem Polyurethan und der Schicht 221 aus einem anderen aufgeschäumten Kunststoffmaterial eine Schicht 223 aus einem Haftvermittler-Material anzuordnen. Dieses Haftvermittler-Material wird im Extruder 213 des Extrusionskopfes 212 verarbeitet. Auch in diesem Fall gilt, daß kontinuierlich oder diskontinuierlich extrudiert werden kann,, wobei die diskontinuierliche Extrusion derzeit bevorzugt wird.

Es ist natürlich auch möglich, auch bei Verwendung lediglich eines einzigen Polyurethan-Materials, d.h., bei Vorhandensein nur einer Schicht aus Polyurethan, eine Schicht aus aufgeschäumtem Kunststoff vorzusehen. Das Extrusions-Blasverfahren gibt zudem in allen Fällen die Möglichkeit, die Dicke dieser aufgeschäumten Schicht am Fertigerzeugnis in Abhängigkeit von den jeweiligen Erfordernissen zu wählen, so daß in einem Arbeitsgang eine Abdeckhaut bzw. Abdeckfolie hergestellt werden kann, die, nachdem sie auf Maß geschnitten worden ist, ohne umfangreiche zusätzliche Arbeiten auf das mit der Haut oder Folie abzudeckende Teil aufgebracht werden kann.

In jedem Fall ermöglicht das vorstehend beschriebene Verfahren gemäß der Erfindung die Herstellung von Abdeckungen für Instrumententafeln in wesentlich billigerer Weise als dies bei den bisher dazu angewendeten Verfahren der Fall ist.

## Patentansprüche

1. Abdeckhaut aus Polyurethan für die Instrumententafel, insbesondere eines Kraftfahrzeuges, die nicht selbsttragend ist und die durch diskontinuierliche Extrusion eines Vorformling hergestellt wurde, der danach in einer Blasform durch inneren Überdruck aufgeweitet wurde, wobei der Vorformling mit einer wenigstens zweischichtigen Wandung hergestellt wurde und jede Schicht aus thermoplastischem Polyurethan besteht und die beiden Schichten sich durch die Eigenschaften der Polyurethane voneinander unterscheiden.

2. Abdeckhaut nach Anspruch 1, **dadurch gekennzeichnet, dass** diese unter Verwendung von Polyester-Polyurethan erhalten wurde.

3. Abdeckhaut nach Anspruch 1, **dadurch gekennzeichnet, dass** diese unter Verwendung von Polyether-Polyurethan erhalten wurde.

4. Abdeckhaut nach Anspruch 1, **dadurch gekennzeichnet, dass** der extrudierte Vorformling eine Wanddicke von etwa 2 mm und das durch den inneren Überdruck erhaltene aufgeweitete Erzeugnis eine Wanddicke von etwa 1 mm aufweist.

5. Abdeckhaut nach Anspruch 1, **dadurch gekennzeichnet, dass** die eine Schicht aus aliphatischen Poylurethan und die andere Schicht aus aromatischem Polyurethan besteht.

6. Abdeckhaut nach Anspruch 5, **dadurch gekennzeichnet, dass** die äußere Schicht aus aliphatischem Polyurethan und die innere Schicht aus aromatischem Polyurethan besteht.

7. Abdeckhaut nach Anspruch 1, **dadurch gekennzeichnet, dass** die äußere Schicht eine Stärke von 0,2 bis 0.6 mm und die innere Schicht eine Stärke von 0,8 bis 1,8 mm aufweist.

8. Abdeckhaut nach Anspruch 1, **dadurch gekennzeichnet, dass** wenigstens eine Schicht aus thermoplastischem Polyurethan und eine andere Schicht aus einem aufschäumbaren Kunststoffmaterial besteht.

9. Abdeckhaut nach Anspruch 1, **dadurch gekennzeichnet, dass** die aufschäumbare Schicht die innere Schicht des Vorformlings bildet.

10. Abdeckhaut nach Anspruch 1, **dadurch gekennzeichnet, dass** zwischen der wenigstens einen Schicht aus thermoplastischem Polyurethan und der Schicht aus einem aufschäumbaren Kunststoff eine zusätzliche Schicht angeordnet ist, die aus einem Haftvermittler besteht.

11. Abdeckhaut nach Anspruch 1, **dadurch gekennzeichnet, dass** sie durch Herstellung eines Hohlkörpers erzeugt wurde, der nach dem Entformen durch einen Trennvorgang zu zwei Enderzeugnissen zerteilt wurde.

## Claims

1. A cover skin of polyurethane for the instrument panel, in particular of a motor vehicle, which is not self-supporting and which was produced by discontinuous extrusion of a preform which was thereafter expanded in a blow moulding mould by an increased internal pressure, wherein the preform was produced with an at least two-layer wall and each layer comprises thermoplastic polyurethane and the two layers differ from each other by virtue of the properties of the polyurethanes.

2. A cover skin according to claim 1 **characterised in that** it was obtained using polyester polyurethane.

3. A cover skin according to claim 1 **characterised in that** it was obtained using polyether polyurethane.

4. A cover skin according to claim 1 **characterised in that** the extruded preform has a wall thickness of about 2 mm and the expanded product obtained by the increased internal pressure has a wall thickness of about 1 mm.

5. A cover skin according to claim 1 **characterised in that** the one layer comprises aliphatic polyurethane and the other layer comprises aromatic polyurethane.

6. A cover skin according to claim 5 **characterised in that** the outer layer comprises aliphatic polyurethane and the inner layer comprises aromatic polyurethane.

7. A cover skin according to claim 1 **characterised in that** the outer layer is of a thickness of 0.2 to 0.6 mm and the inner layer is of a thickness of 0.8 to 1.8 mm.

8. A cover skin according to claim 1 **characterised in that** at least one layer comprises thermoplastic polyurethane and another layer comprises a foamable plastic material.

9. A cover skin according to claim 8 **characterised in that** the foamable layer forms the inner layer of the preform.

10. A cover skin according to claim 1 **characterised in that** arranged between the at least one layer of thermoplastic polyurethane and the layer of a foamable plastic material is an additional layer comprising a bonding agent.

11. A cover skin according to claim 1 **characterised in that** it was produced by production of a hollow body which after removal from the mould was divided by a separation operation into two end products.

## Revendications

1. Peau de revêtement en polyuréthane pour un tableau de bord, en particulier d'un véhicule automobile, qui n'est pas autoportante et qui a été fabriquée par extrusion discontinue d'une préforme qui a ensuite été élargie dans un moule de soufflage par surpression interne, la préforme ayant été fabriquée avec une paroi comprenant au moins deux couches et chaque couche étant constituée de polyuréthane thermoplastique et les deux couches se différenciant l'une de l'autre par les propriétés des polyuréthanes.

2. Peau de revêtement selon la revendication 1, **caractérisée en ce que** celle-ci a été obtenue en utilisant du polyester-polyuréthane.

3. Peau de revêtement selon la revendication 1, **caractérisée en ce que** celle-ci a été obtenue en utilisant du polyéther-polyuréthane.

4. Peau de revêtement selon la revendication 1, **caractérisée en ce que** la préforme extrudée a une épaisseur de paroi d'environ 2 mm et **en ce que** le produit élargi obtenu par la surpression interne a une épaisseur de paroi d'environ 1 mm.

5. Peau de revêtement selon la revendication 1, **caractérisée en ce qu'**une couche est constituée de polyuréthane aliphatique et l'autre couche est constituée de polyuréthane aromatique.

6. Peau de revêtement selon la revendication 5, **caractérisée en ce que** la couche extérieure est constituée de polyuréthane aliphatique et la couche intérieure est constituée de polyuréthane aromatique.

7. Peau de revêtement selon la revendication 1, **caractérisée en ce que** la couche extérieure a une épaisseur comprise entre 0,2 et 0,6 mm et la couche intérieure a une épaisseur comprise entre 0,8 et 1,8 mm.

8. Peau de revêtement selon la revendication 1, **caractérisée en ce qu'**au moins une couche est constituée de polyuréthane thermoplastique et une autre couche est constituée de matière plastique pouvant être moussée.

9. Peau de revêtement selon la revendication 8, **caractérisée en ce que** la couche pouvant être moussée forme la couche intérieure de la préforme.

10. Peau de revêtement selon la revendication 1, **caractérisée en ce qu'**une couche supplémentaire, qui est constituée d'un agent de pontage, est placée entre la au moins une couche en polyuréthane thermoplastique et la couche en matière plastique pouvant être moussée.

11. Peau de revêtement selon la revendication 1, **caractérisée en ce qu'**elle a été produite par la fabrication d'un corps creux qui a été divisé en deux produits finis par une opération de séparation après le démoulage.
